Europäisches Patentamt

European Patent Office

Office européen des brevets

(11) Publication number: **0 260 031 B1**

# EUROPEAN PATENT SPECIFICATION

(45) Date of publication of patent specification: **02.01.92**  (51) Int. Cl.⁵: **F01N  3/02**

(21) Application number: **87307593.1**

(22) Date of filing: **27.08.87**

(54) **Particulate trap regeneration system for an engine.**

(30) Priority: **28.08.86 US 901483**

(43) Date of publication of application:
**16.03.88 Bulletin  88/11**

(45) Publication of the grant of the patent:
**02.01.92 Bulletin  92/01**

(84) Designated Contracting States:
**DE FR GB IT SE**

(56) References cited:
**WO-A-86/04641**      **DE-A- 3 408 057**
**DE-A- 3 610 057**    **DE-B- 1 080 813**
**DE-C- 922 800**      **DE-C- 3 538 109**
**FR-A- 1 367 809**    **FR-A- 1 472 588**
**FR-A- 2 538 448**

**PATENT ABSTRACTS OF JAPAN, vol. 7, no.
291 (M-265)[1436], 27th December 1983; &
JP-A-58 162 713 (TOYOTA JIDOSHA KOGYO
K.K.) 27-09-1983**

**Idem**

**PATENT ABSTRACTS OF JAPAN, vol. 8, no.
108 (M-297)[1545], 19th May 1984; & JP-A-59
18 221 (TOYO KOGYO K.K.) 30-01-1984**

(73) Proprietor: **ALLIED-SIGNAL INC. (a Delaware
corporation)
Columbia Road and Park Avenue P.O. Box
2245R
Morristown New Jersey 07960(US)**

(72) Inventor: **Hardy, James A.
310 Fowling Street
Playa Del Rey California(US)**

(74) Representative: **Rees, David Christopher et al
Kilburn & Strode 30 John Street
London WC1N 2DD(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a particulate trap regeneration system for an internal combustion engine to provide control of emissions from motor vehicles.

Various authorities have adopted stringent new standards for particulate emissions for internal combustion engines, particularly diesel powered road vehicles. These new standards in some cases necessitate a device in a diesel engine exhaust system for the removal of the particulates. Such exhaust treatment systems typically consist of a particulate trap to collect particulates from the exhaust gas stream during engine operation. Such particulates consist largely of carbon and heavy hydrocarbon particles which, with continued operation, tend to plug the exhaust filter, causing a restriction to the normal exhaust gas flow. Periodic cleaning of the particles from the exhaust gas filter is required in order to avoid an increase in the engine exhaust back pressure which adversely affects fuel economy and vehicle performance.

In order to burn the filtered particulate it is necessary to increase the exhaust gas temperature in the filter or trap. Under typical operating conditions, diesel engine exhaust temperatures high enough to burn the particulates are not experienced for sufficient time periods to clean the trap. Therefore, either a separate device is required to provide sufficient heat to burn the accumulated particulates or a separate means of achieving increased exhaust gas temperatures must be found.

One means for increasing the exhaust gas temperature is to use a burner upstream of the filter. This may be accomplished by any practical burner mechanism such as the mechanism disclosed in the copending United States Patent Application Serial No. 749,346, filed on November 1, 1985 and entitled "Diesel Engine particulate Trap Regeneration System". However, burners have several disadvantages, which include the use of additional fuel, the pumping, transport and injection of that fuel and the general problems of stable combustion at low pressures.

It is an object of the present invention to provide a system which eliminates the need for a burner device to be used in cooperation with the particulate filter in an engine.

It is another object of the present invention to provide a particulate trap and regeneration system suitable for use in a diesel engine in order to reduce pollution.

It is another object of this invention to provide an improved system for controlling the regeneration cycle of the particulate trap, thus causing a minimum performance and efficiency loss in the engine.

It is a further object of the invention to provide such a system that can be produced in a simple and reliable manner.

It is known from DE-A-3408057, JP-A-58162713 and FR-A-2538448 to provide a filter or particulate trap for exhaust gases in which a valve can be used to throttle the exhaust gases, thereby increasing the temperature. In the case of DE-A-3408057, the valve is controlled through pressure sensors upstream and downstream of the filter. In the case of JP-A-58162713, the purpose of increasing the exhaust gas temperature is to reduce engine torque, and the control is dependent on various parameters.

According to one aspect of the present invention, there is provided a method of controlling the temperature in a particulate trap regeneration system in the exhaust gas conduit of an engine which comprises sensing selected engine operating parameters and opening and closing valve means in the exhaust gas conduit in response to the sensed parameters, characterised in that the operation of the valve means is controlled by a microprocessor having programmed into its memory an engine map of loaded trap pressure drop vs. rack position or loaded trap pressure drop vs. air flow, or air flow vs. rack position for a range of engine speeds, and in which the microprocessor receives input signals from engine operating parameters sensing means and compares the sensed parameters with the map for a given engine speed.

According to another aspect of the invention, a particular trap regeneration system operating such a method in an engine includes an exhaust gas conduit arranged to perform a method as claimed in any preceding claim in an engine including an exhaust gas conduit arranged to discharge exhaust gas and an exhaust gas particulate trap in the exhaust gas conduit, downstream of the engine, including valve means in the exhaust gas conduit for increasing the temperature of the exhaust gas in the particulate trap and valve operating means including means for sensing selected engine operating parameters and means for opening and closing the valve means in response to the sensed parameters, characterised in that the valve operating means includes a microprocessor having programmed into its memory an engine map of loaded trap pressure drop vs. rack position, or loaded trap pressure drop vs. air flow, or air flow vs. rack position, for a given range of engine speeds, the microprocessor being arranged to receive input signals from engine operating parameters sensing means and being arranged to compare the sensed parameters with the map for a given engine speed.

Thus the invention can accomplish the filtering of particulates from engine exhaust gases and more specifically the periodic incineration of the collcted particulates in the filter through a temporary increase in the exhaust gas temperature by back pressuring of the engine. That is to say, the regeneration system is capable of raising the exhaust gas temperature to levels sufficient to cause incineration of the trapped particulates without the use of an auxiliary burner.

Preferably, the valve means is a butterfly valve. More specifically, the valve means preferably comprises a valve casing defining a passage therethrough, a valve head, and pivot pins on each side of the valve head extending into the casing and pivotably supporting the valve head, the casing passage having cylindrical inlet and outlet sections and a generally rectangularly shaped cross-sectional flow area within the valve, the valve head being generally rectangularly shaped and sized to be pivotable within the casing to open and close the casing passage. Preferably, the casing includes a tapered section between the circular inlet section and the rectangularly shaped section and circular outlet section in order to provide vernier flow control. Thus, in a preferred arrangement, the valve means is a back pressure valve located immediately upstream of the particulate trap in the exhaust gas conduit.

Preferably, the valve operating means further comprises a microprocessor, a pressure sensor upstream of the trap, temperature sensors upstream and downstream of the trap, an engine rack position sensor, and an engine speed or RPM sensor.

Alternatively, in the case of a turbocharged engine, the valve operating means may comprise: a microprocessor, a pressure sensor upstream of the trap, temperature sensors upstream and downstream of the traps, an air flow measurement device upstream of the compressor of the turbocharger and an engine speed sensor, and the microprocessor includes an engine map of loaded trap pressure drop vs. air flow for a range of engine speeds programmed into its memory, the microprocessor being arranged to receive input signals from the pressure, engine speed and temperature sensors, and from the air flow measurement device, and being arranged to compare the sensed parameters with the map of pressure drop vs. air flow for a given engine speed.

In another preferred embodiment, the valve operating means comprises: a microprocessor, temperature sensors upstream and downstream of the trap, an air flow measurement device, a rack position sensor and an engine speed sensor, and the microprocessor includes an engine map of air flow vs. rack position for a range of engine speeds programmed into its memory, the microprocessor being arranged to receive input signals from the temperature, engine speed and rack position sensors, and from the air flow measurement device, and being arranged to compare the sensed parameters with the map of air flow vs. rack position for a given engine speed.

In all cases, the system may include a manual override operable by the vehicle driver to override the sensed signals.

In a preferred form, therefore, the invention may provide a system for the regeneration of an exhaust gas particulate trap comprising: an engine including an inlet air manifold, an exhaust gas manifold and exhaust gas piping; a turbocharger including a compressor for supplying compressed air to the engine and a turbine driven by engine exhaust gas, for powering the compressor, an exhaust gas particulate trap located dowstream of the exhaust manifold; valve means for increasing the temperature of the exhaust gas in the particulate trap, the valve means being located in the exhaust gas piping; an actuator for opening and closing the valve means; and means for sensing selected engine operating parameters and controlling the actuator in response thereto.

Alternatively, a preferred apparatus in accordance with the present invention may be considered to comprise: a particulate trap regeneration system used in association with a turbocharger or naturally aspirated engine having an exhaust gas particulate trap within the engine exhaust system downstream of the engine, a back pressuring valve within the engine exhaust gas flow downstream of the engine, an actuator to control the movement of the back pressure valve and a microprocessor for receiving relevant engine operating parameters from sensors and controlling the actuator. Under normal operating procedure, the back pressure valve would remain in a wide open position. However, when the particulate trap pressure drop reaches a value indicating that a significant amount of particles are present, as sensed by the microprocessor, the back pressure valve is partially closed. At this time the microprocessor activates the actuator to close the valve, thus, increasing the particulate trap temperature, which in turn allows oxidation of the trapped debris.

According to another aspect of the invention, there is provided a method of controlling the temperature in a particulate trap regeneration system in the exhaust gas conduit of an engine characterised by sensing selected engine operating parameters and opening and closing valve means in the exhaust gas conduit in response to the sensed parameters.

Preferably, the method includes sensing the exhaust gas pressure upstream of the valve means, engine speed, rack position and exhaust gas temperature upstream of the trap, comparing the sensed pressure with the pressure on an engine map of pressure vs. rack position for a range of engine speeds and inlet trap temperatures, and restricting exhaust gas flow into the trap when the pressure is less than the map pressure and opening the valve means when the pressure exceeds the corresponding map pressure.

Alternatively, in the case of a turbocharged engine, the method preferably includes sensing the rack position, the air flow upstream of the compressor of a turbocharger used in the engine, the temperature at the inlet to the trap and the engine speed, calculating the air/fuel ratio, comparing the air/fuel ratio and air flow with a map of air/fuel ratio vs. air flow for a given engine speed, and closing the valve means when the air/fuel ratio exceeds the air/fuel ratio on the engine map for a given engine speed and rack position and opening the valve means when the ratio is less than the ratio on the map.

In both cases, the method preferably includes the further steps of sensing the exhaust gas temperature upstream of the trap and regulating the position of the valve means in order to maintain a constant inlet temperature. Preferably, therefore, the valve is opened whenever the inlet temperature exceeds the desired temperature and the valve is closed whenever the inlet temperature is less than the desired temperature. Such an arrangement may also include the step of sensing the exhaust gas temperature downstream of the trap and opening the back pressure valve when the outlet temperature exceeds a predetermined value.

In its broadest sense, the invention may be considered to extend to a method of regenerating an exhaust gas particulate trap in an exhaust gas engine system comprising the steps of: regulating the exhaust gas flow to maintain a desired trap inlet temperature.

A preferred form of the invention may also be considered to reside in an engine braking system comprising: an engine including an inlet air manifold and an exhaust gas manifold and engine exhaust gas piping; valve means for regulating the exhaust gas flow through the exhaust gas piping; actuator means for opening and closing the valve means; and means for sensing selected engine operating parameters and controlling the actuator means in response thereto.

In such an arrangement, the means for selection may comprise a microprocessor; a pressure sensor in the exhaust gas piping upstream of the valve means; an engine rack position sensor; an engine speed sensor; and a driver actuated input signal for initiating the braking mode. The microprocessor preferably includes an engine map of back pressure vs. rack position for a range of engine speeds programmed into its memory, the microprocessor being arranged to receive input signals from the pressure, engine speed, and rack position sensors and to compare the sensed parameters with the map of pressure vs. rack position for a given engine speed. Preferably, the driver actuated input signal overrides the signals from all sensors. The system preferably further includes a turbocharger having a compressor for supplying compressed air to the engine and a turbine for powering the compressor, the turbine being driven by engine exhaust gas.

The invention may be carried into practice in various ways and some embodiments will now be described by way of example with reference to the accompanying drawings in which:

Figure 1 is a schematic view of a turbocharged diesel engine incorporating an exhaust gas particulate trap regeneration system in accordance with the present invention;

Figure 2 is a schematic view similar to Figure 1 but additionally including a charge air cooler;

Figure 3a is a longitudinal section through a back pressure valve used in accordance with the present invention;

Figure 3b is a transverse section through the valve shown in Figure 3a;

Figure 4 is an engine map of loaded trap pressure vs. rack position at two engine speeds;

Figure 5 is an engine map of engine back pressure vs. fuel input (rack position) for one engine speed and four intake temperatures;

Figure 6 is an engine map of lines of constant back pressure required to obtain a 1200°F (649°C) trap inlet temperature plotted with fuel input and engine speed as coordinates;

Figure 7 is an engine map of engine back pressure vs. engine air flow;

Figure 8 is an engine map of air flow vs. fuel input;

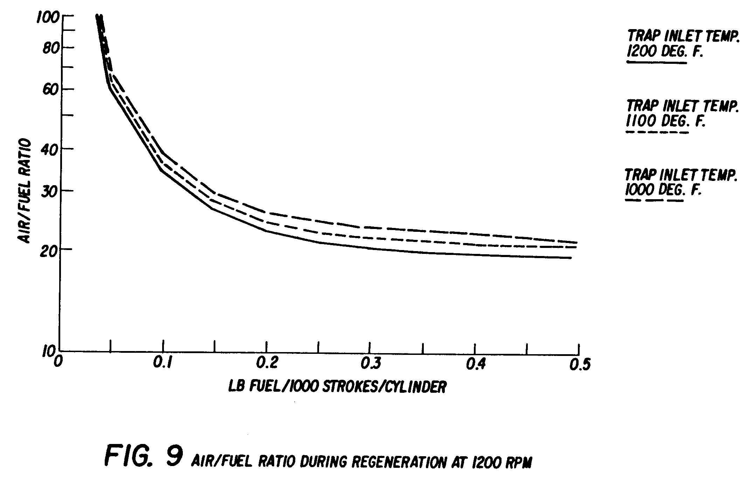

Figure 9 is an engine map of air/fuel ratio vs. fuel input; and

Figure 10 is an engine map of valve area vs. fuel input.

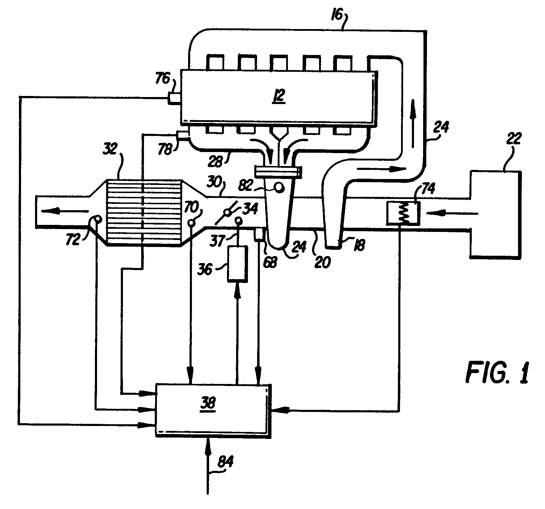

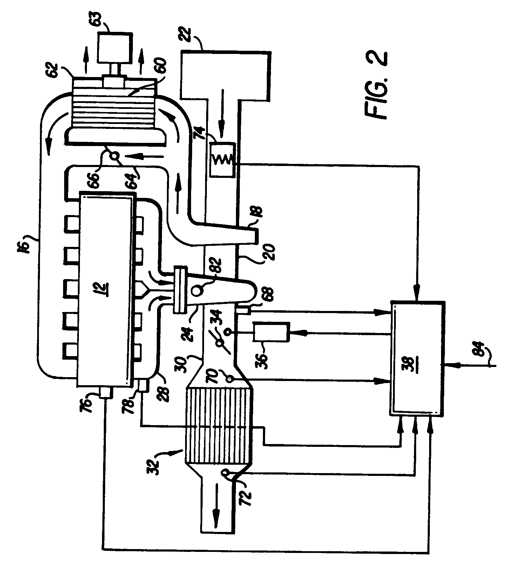

An engine particulate trap system is shown in Figures 1 and 2 and generally comprises a combustion engine 12, such as a diesel powered internal combustion engine having a plurality of combustion cylinders, for rotably driving an engine crank shaft. While shown to be used with a turbocharger 20, the particulate trap system of the present invention can be used with a naturally aspirated engine. The engine has an air intake manifold 16 through which air is supplied by the compressor 18 of the turbocharger 20. In operation the turbocharger compressor 18 draws in ambient air through an air filter 22 and compresses the air with a rotatable compressor impeller to form so-called charge air for supply to the engine 12 via the inlet manifold 16 for combustion.

Exhaust products which are discharged from the engine 12 through an exhaust manifold 28 are supplied to the turbine 24 of the turbocharger 20. The high temperature exhaust gas rotatably drives a turbine wheel (not shown) within the turbine housing at a relatively high rotational speed (up to 190,000 RPM) to drive in turn the compressor impeller within the compressor housing 18. To this end the turbine wheel and compressor impeller are carried for simultaneous rotation on a common shaft supported within the turbocharger centre housing. After driving communication with the turbine wheel, the exhaust gases are discharged from the turbocharger 20 to an exhaust gas outlet 30 which includes the exhaust gas particulate trap 32 and noise abatement equipment. Located within the exhaust as outlet 30 is a back pressure valve 34.

As shown in Figure 1, the particulate trap regeneration system comprises the exhaust gas particulate trap 32, the back pressure valve 34 preferably located upstream of the particulate trap, an actuator 36 for electronically controlling the movement of the back pressure valve, and a microprocessor 38 arranged to receive relevant engine operating parameters and to control movement of the valve 34 via the actuator 36. Alternatively, the back pressure valve can be located upstream of the turbocharger 20 or downstream of the trap 32.

The exhaust gas particulate trap can be made of any suitable material or configuration capable of trapping and holding substantial quantities of particulates from the engine exhaust gas stream without creating an excessive restriction to the exhaust gas flow. It must also be able to withstand the elevated temperatures required during incineration of the trapped particles. When used with a turbocharged engine, the particulate trap 32 should be located as close downstream of the turbocharger 20 as possible so that the exhaust gas can retain its high temperature. The trap 32 should have as low a pressure drop as possible in order to minimise the effect on engine performance.

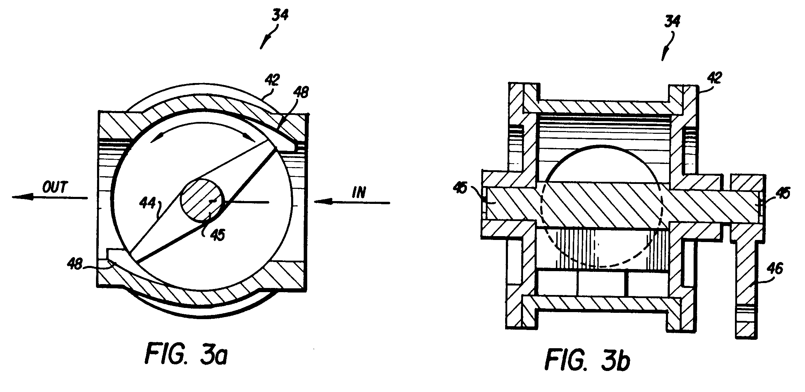

The back pressure valve 34 can be any type of valve which provides control over the flow area; for example a butterfly valve. However, it has been found that it is important to provide accurate flow rates near the shut off condition, therefore, a valve as shown in Figures 3a or 3b is preferred. The valve 34 includes a casing 42 which converts the circular flow area of the inlet conduit into a generally rectangularly shaped cross-sectional flow area within the valves as shown in Figure 3b. A valve head 44 having pivot pins 45 at each side is mounted within the casing 42. The pins 45 extend into bores in the casing 42 and pivotably support the valve head 44. One of the pins is connected to a suitable valve arm 46 which is connected to and pivoted by an actuator 36. One edge 48 at the inlet and outlet of the valve is tapered in order to provide vernier control near the shut off point of the valve.

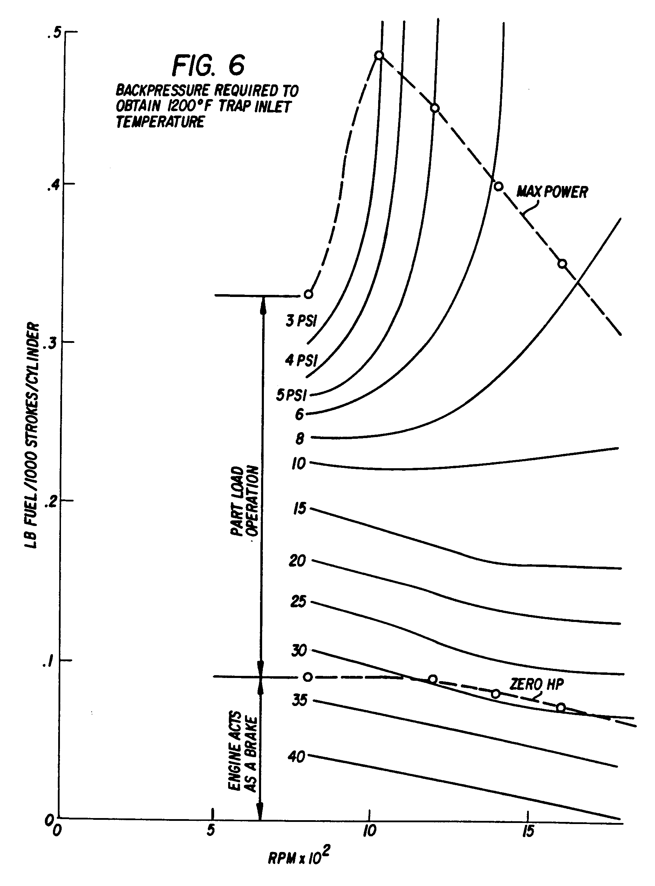

In addition to reducing exhaust emissions, the back pressure valve offers an additional important benefit, namely, braking. As shown in Figure 6, the combination of closing the back pressure valve to increase back pressure and a reduction of the fuel flow makes the diesel engine an energy absorber rather than an energy producer. It is envisaged that the back pressure valve will communicate with the vehicle control system to provide braking at various times. Of particular significance is the use of the valve to brake on long steep gradients without the use of the vehicle friction brakes. Use of the back pressure valve for braking has three advantages: firstly, safety, since it is a back-up to the vehicle friction brake system; secondly, economy, since it extends the life of the vehicle friction brake system; and thirdly, utility, since use of the back pressure valve for braking will automatically provide a degree of particulate trap regeneration.

The actuator 36 (Figures 1 and 2) can be of any suitable type, e.g. mechanical, electrical, pneumatic, hydraulic or any combination thereof. The actuator 36 receives a signal from the microprocessor 38 and conveys it into the appropriate movement of the valve arm 46 (Figure 3) for proper positioning of the valve head 44.

As shown in Figure 2, a charge air cooler 60 can be used in association with the turbocharged engine system of Figure 1. When used, the charge air cooler 60 is located downstream of the compressor 18 and operates to reduce the temperature of the charge air in order to increase its density as it is supplied to the engine 12. A fan 62, run by a motor 63, can be located adjacent the charge air cooler 60 for supplying cooling air through the charge air cooler. Located in parallel relationship to the charge air cooler is a charge air bypass conduit 64 having a charge air bypass valve 66 for controlling the amount of air flow to the charge air cooler 60.

Figures 1 and 2 show the controls which function to determine when the trap needs regeneration and then to maintain a nearly constant, high exhaust temperature over a wide range of engine speeds and loads during the time the trap is being regenerated. As shown, the microprocessor 38 receives signals from a selected number of inputs depending on the desired engine parameters used: a pressure sensor 68 located upstream of the back pressure valve 34, temperature sensors 70 and 72 located immediately upstream and downstream of the trap 32, an air flow measurement device 74 located between the air filter 22 and the compressor 18, an engine speed sensor 76, a rack position or fuel flow sensor 78, an oxygen sensor 82 in the exhaust manifold and a signal 84 from a driver activated override lever. It is to be understood that the rack position sensor and the fuel flow sensor are interchangeable, however, a fuel flow sensor will provide a more desirable measurement.

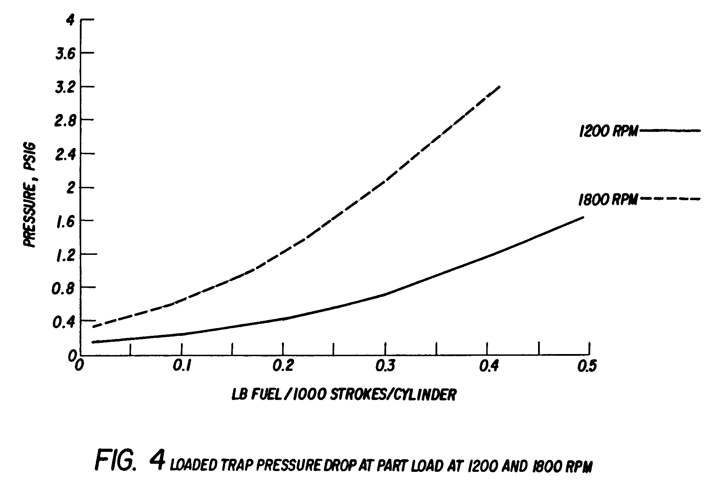

The most likely method of determining when the trap 32 needs regeneration is to sense the pressure drop across the trap. When this pressure drop exceeds a value that represents a loaded trap pressure drop (see Figure 4), the control will initiate the regeneration mode. The regeneration mode will then be continued until the particulates in the trap 32 are essentially all oxidised. Alternatively, continuing the regeneration mode for a certain time interval is an adequate and simple means for accomplishing this.

The pressure drop through the loaded trap will vary with engine load and speed. A map of the loaded trap pressure drop versus rack position or fuel flow and rpm will need to be developed for each engine and exhaust system. Figure 4 is a typical map for a typical engine.

Each map can best be developed by running tests but can also be approximated by analytical means. The map will then be programmed into the memory of the microprocessor 38. Whenever the pressure drop exceeds the value on the stored map for a given load and speed, the regeneration mode will be triggered. In addition, the driver activated lever mounted near the vehicle steering wheel can send a signal 84 which can be used to close the valve 34 when braking is desired.

During the regeneration mode, the control should modulate the back pressure valve 34 so that an essentially constant trap inlet temperature is maintained. This temperature should be approximately 1100° F to 850° F (399 to 454° C) for catalysed traps. The most direct means for controlling exhaust temperature is to sense the exhaust temperature at the sensor 70, to close the back pressure valve 34 incrementally whenever the exhaust temperature is lower than the desired temperature and to open the valve whenever the temperature exceeds the desired temperature. Use of temperature as the controlling parameter requires careful dynamic matching of all system components to prevent valve over-travel and the attendant over-shooting of the exhaust gas temperature which could damage the particulate trap and adversely affect engine emissions and performance.

Care must also be taken to prevent exhaust gas over-temperature during regeneration and following a sudden increase in fuel flow. The back pressure valve must open quickly when the engine fuel input is suddenly increased. Indeed, the back pressure valve must open very quickly because the fuel input can increase from nearly zero input to maximum input within two revolutions of the engine. This quick response requires some means of anticipating the change in fuel input and/or a means of slowing the rate for increase in fuel. Hence, a rack position sensor 78 may be incorporated into the control system.

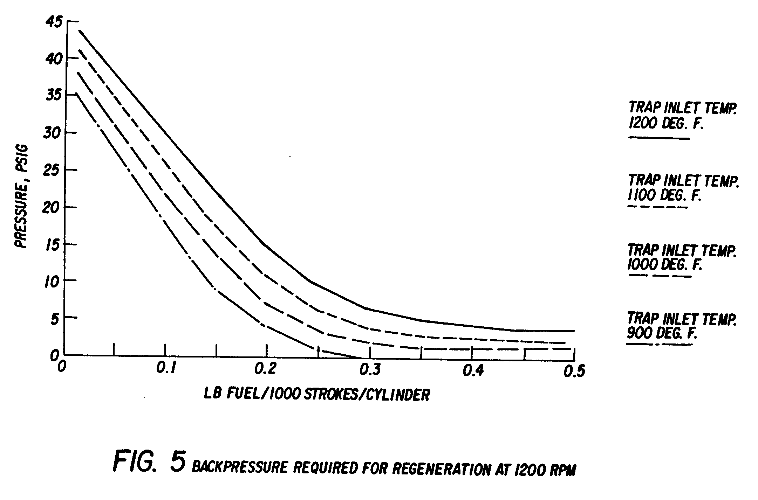

There are other less direct means for controlling exhaust temperature. For example, an engine map can be developed that will show what back pressure is needed to obtain the desired exhaust temperature for each combination of rack position or fuel flow, engine rpm and intake temperature. Using these parameters to control the back pressure and exhaust temperature is less direct than controlling temperature, but it would suffer less from response and overshoot problems. Figure 5 is a typical map of back pressure vs. fuel input (rack position) for one speed and intake temperature. Figure 6 is an engine map of the back pressure required to obtain 1200° F (649° C) trap inlet temperature plotted as a function of fuel input and engine speed. Hence, for any given fuel flow and engine speed the microprocessor can signal the actuator to open or close the back pressure valve in order to obtain the desired back pressure.

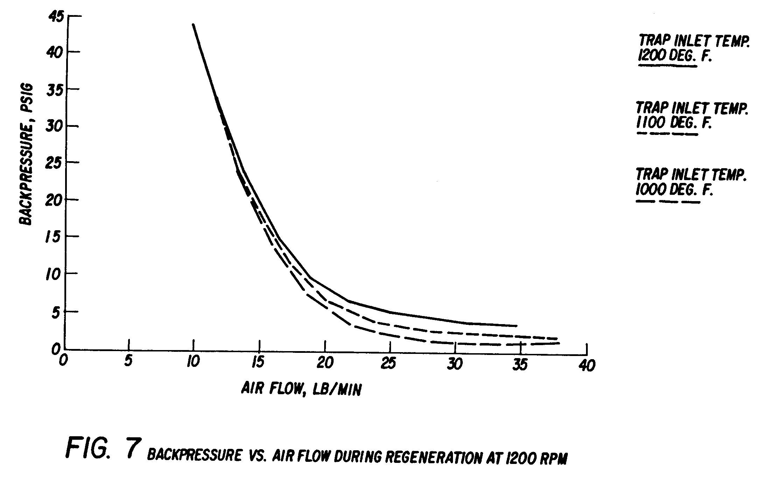

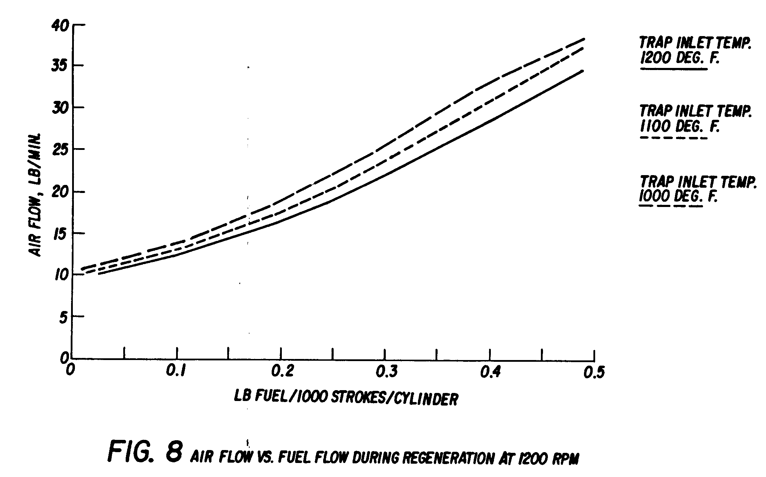

A map of the exhaust pressure required to obtain a desired exhaust temperature for each combination of engine air flow, rack position or fuel flow and intake temperature can be developed as shown in Figures 7 and 8.

Where the air/fuel ratio can be sensed accurately with an oxygen sensor 82 over a range from 18:1 to 80:1, this parameter could also be used along with engine speed and trap inlet temperature to signal to the control system what back pressure is required to obtain a desired exhaust temperature. Figure 8 shows a plot of air/fuel ratio vs. air flow required to achieve various trap inlet temperatures.

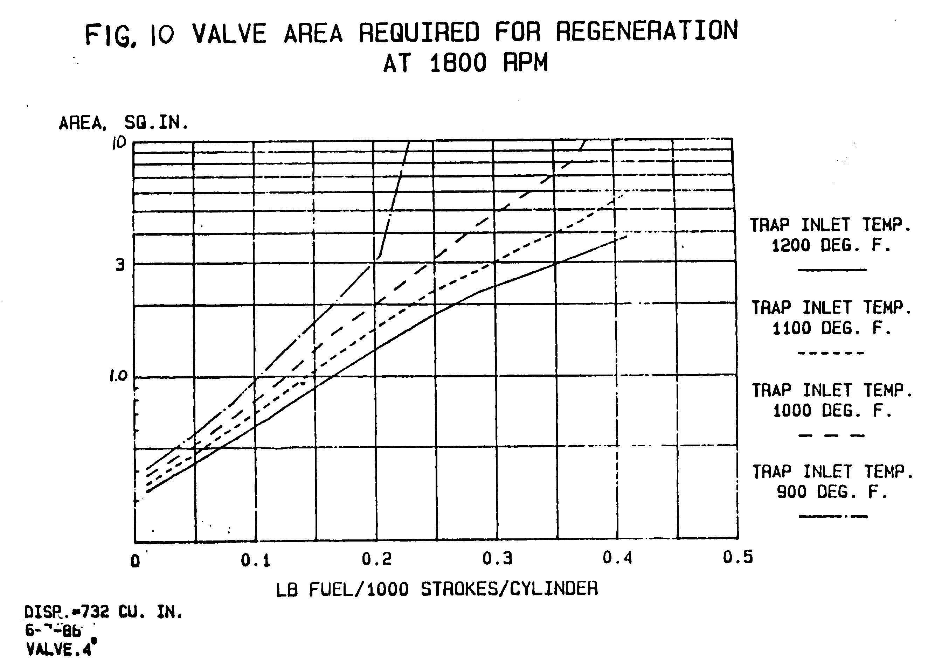

The back pressure valve position might be used instead of back pressure to maintain the desired trap regeneration temperature providing the valve flow area can be accurately related to position for areas of 10.0 sq. in. (64.5cm$^2$) down to approximately 0.2 sq. in. (0.13 cm$^2$) Figure 10 shows valve flow area vs. fuel input.

**Claims**

1. A method of controlling the temperature in a particulate trap regeneration system (32) in the exhaust gas conduit (28) of an engine (12) which comprises sensing selected engine operating parameters (68, 70, 72, 74, 76, 78, 82) and opening and closing valve means (34) in the exhaust gas conduit (28) in response to the sensed parameters, characterised in that the operation of the valve means (34) is controlled by a microprocessor (38) having programmed into its memory an engine map of loaded trap pressure drop vs. rack position or loaded trap pressure drop vs. air flow, or air flow vs. rack position for a range of engine speeds, and in which the microprocessor (38) receives input signals from engine operating parameters sensing means and compares the sensed parameters with the map for a given engine speed.

2. A method as claimed in Claim 1, characterised by sensing the exhaust gas pressure (68) upstream of the valve means (34), engine speed (76), rack position (78) and exhaust gas temperature (70) upstream of the trap (32), comparing the sensed pressure with the pressure on an engine map of pressure drop vs. rack position for a range of engine speeds and inlet trap temperatures, and restricting exhaust gas flow into the trap (32) when the pressure drop is less than the map pressure drop and opening the valve means (34) when the pressure drop exceeds the corresponding map pressure drop.

3. A method as claimed in Claim 1, characterised by sensing the rack position (78), the air flow (74) upstream of the compressor (18) of a turbocharger used in the engine, the temperature (70) at the inlet to the trap (32) and the engine speed (76), calculating the air/fuel ratio, comparing the air/fuel ratio and air flow with a map of air/fuel ratio vs. air flow for a given engine speed, and closing the valve means (34) when the air/fuel ratio exceeds the air/fuel ratio on the engine map for a given engine speed and rack position and opening the valve means (34) when the ratio is less than the ratio on the map.

4. A method as claimed in Claim 2 or Claim 3, characterised by the further steps of sensing the exhaust gas temperature (70) upstream of the trap (32) and regulating the position of the valve means (34) in order to maintain a constant inlet temperature.

5. A particulate trap regeneration system arranged to perform a method as claimed in any preceding claim in an engine (12) including an exhaust gas conduit (28) arranged to discharge exhaust gas and an exhaust gas particulate trap (32) in the exhaust gas conduit (28), downstream of the engine (12), including valve means (34) in the exhaust gas conduit (28) for increasing the temperature of the exhaust gas in the particulate trap and valve operating means including means for sensing selected engine operating parameters (68, 70, 72, 74, 76, 78, 82) and means for opening and closing (36, 38) the valve means (34) in response to the sensed parameters, characterised in that the valve operating means includes a microprocessor (38) having programmed into its memory an engine map of loaded trap pressure drop vs. rack position, or loaded trap pressure drop vs. air flow, or air flow vs. rack position, for a given range of engine speeds, the microprocessor (38) being arranged to receive input signals from engine operating parameters sensing means and being arranged to compare the sensed parameters with the map for a given engine speed.

6. A system as claimed in Claim 5, characterised in that the valve means comprises: a valve casing (42) defining a passage therethrough, a valve head (44), and pivot pins (45) on each side of the valve head (44) extending into the casing and pivotably supporting the valve head (44), the casing passage having cylindrical inlet and outlet sections and a generally rectangularly shaped cross-sectional flow area within the valve, the valve head (44) being generally rectangularly shaped and sized to be pivotable within the casing (42) to open and close the casing passage.

7. A system as claimed in Claim 6, characterised in that the casing (42) includes a tapered section between the circular inlet section and the rectangularly shaped section and between the rectangular shaped section and the circular outlet section in order to provide vernier flow control.

8. A system as claimed in any of Claims 5 to 7, characterised in that the valve means is a back pressure valve (34) located immediately upstream of the particulate trap (32) in the exhaust gas conduit (28).

9. A system as claimed in any of Claims 5 to 8, characterised in that the valve operating means comprises the microprocessor (38), a pressure sensor (68) upstream of the trap, temperature sensors upstream and downstream of the trap (32), an engine rack position sensor (78), and an engine speed or RPM sensor (76), the engine map of the microprocessor (38) being of loaded trap pressure drop vs. rack position for a range of engine speeds, the microprocessor (38) being arranged to receive input signals from the pressure, temperature, engine speed or RPM, and rack position sensors and being arranged to compare these sensed parameters with the map of pressure drop vs. rack position for a given engine speed.

10. A system as claimed in any of Claims 5 to 8, for use with a turbocharged engine characterised in that the valve operating means comprises the microprocessor (38), a pressure sensor (68) upstream of the trap (32), temperature sensors (70, 72) upstream and downstream of the trap (32), an air flow measurement device (74) upstream of the compressor (18) of the turbocharger and an engine speed sensor (76), the engine map of the microprocessor (38) being of loaded trap pressure drop vs. air flow for a range of engine speeds, the microprocessor (38) being arranged to receive input signals from the pressure, engine speed and temperature sensors, and from the air flow measurement device, and being arranged to compare these sensed parameters with the map of back pressure drop vs. air flow for a given engine speed.

11. A system as claimed in any of Claims 5 to 8, characterised in that the valve operating means comprises the microprocessor (38), temperature sensors (70, 72) upstream and downstream of the trap (32), an air flow measurement device (74), a rack position sensor (78) and an engine speed sensor (76), the engine map of the microprocessor (38) being of air flow vs. rack position for a range of engine speeds, the microprocessor (38) being arranged to receive input signals from the temperature, engine speed and rack position sensors, and from the air flow measurement device, and being arranged to compare to these sensed parameters with the map of air flow vs. rack position for a given engine speed.

12. A system as claimed in any of Claims 5 to 11, characterised by a manually operable signal (84) which overrides the signals from the various sensors.

**Revendications**

1. Procédé pour commander la température dans un système de régénération de piège à particules (32) dans le conduit des gaz d'échappement (28) d'un moteur (12) qui comprend les étapes consistant à détecter les paramètres de fonctionnement du moteur sélectionnés (68, 70, 72, 74, 76, 78, 82) et ouvrir ou fermer le moyen de soupape (34) dans le conduit des gaz d'échappement (28) en réponse aux paramètres détectés, caractérisé en ce que l'actionnement du moyen de soupape (34) commandé par un microprocesseur (38) ayant programmé dans sa mémoire une table de correspondance du moteur de la chute de pression de piège chargé par rapport à la position de la crémaillère ou de la chute de pression du piège chargé par rapport au débit d'air, ou du débit d'air par rapport à la position de la crémaillère pour une plage des vitesses du moteur et dans lequel le microprocesseur (38) reçoit des signaux d'entrée provenant des moyens de détection des paramètres de fonctionnement du moteur et compare les paramètres détectés à la table de correspondance pour une vitesse du moteur donnée.

2. Procédé selon la revendication 1, caractérisé par l'étape consistant à détecter la pression des gaz d'échappement (68) en amont du moyen de soupape (34), la vitesse du moteur (76), la position de la crémaillère (78) et la température des gaz d'échappement (70) en amont du piège (32), comparer la pression détectée à la pression sur une table de correspondance du moteur de la chute de pression par rapport à la position de la crémaillère pour une plage des vitesses du moteur et des températures de piège d'entrée et limiter l'écoulement des gaz d'échappement dans le piège (32) lorsque la chute de pression est infériure à la chute de pression de la table de correspondance et ouvrir le moyen de soupape (34) lorsque la chute de pression dépasse la chute de pression de la table de correspondance correspondante.

3. Procédé selon la revendication 1, caractérisé par l'étape consistant à détecter la position de la crémaillère (78), l'écoulement de l'air (74) en amont du compresseur (18) d'un suralimenteur utilisé dans le moteur, la température (70) à l'entrée vers le piège (32) et la vitesse du moteur (76), calculer le rapport air/carburant, comparer le rapport air/carburant et le débit d'air avec une table de correspondance du rapport air/carburant par rapport au débit d'air pour une vitesse du moteur donnée et fermer le moyen de soupape (34) lorsque le rapport air/carburant dépasse le rapport air/carburant sur la table de correspondance du moteur pour une vitesse du moteur donnée et la position de la crémaillère et ouvrir le moyen de soupape (34) lorsque le rapport est inférieur au rapport sur la table de correspondance.

4. Procédé selon la revendication 2 ou la revendication 3, caractérisé par les étapes supplémentaires consistant à détecter la température des gaz d'échappement (70) en amont du piège (32) et réguler la position du moyen de soupape (34) afin de maintenir une température d'entrée constante.

5. Système de régénération de piège à particules disposé pour effectuer un procédé selon l'une quelconque des revendications précédentes dans un moteur (12) comportant un conduit des gaz d'échappement (28) disposé pour évacuer les gaz d'échappement et un piège à particules des gaz d'échappement (32) dans le conduit des gaz d'échappement (28), en aval du moteur (12), comportant un moyen de soupape (34) dans le conduit des gaz d'échappement (28) pour augmenter la température du gaz d'échappement dans le piège à particules et un moyen d'actionnement de soupape comportant un moyen pour détecter les paramètres de fonctionnement du moteur sélectionnés (68, 70, 72, 74, 76, 78, 82) et un moyen pour ouvrir et fermer (36, 38) le moyen de soupape (34) en réponse aux paramètres détectés, caractérisé en ce que le moyen d'actionnement de soupape comporte un microprocesseur (38) ayant programmé dans sa mémoire une table de correspondance du moteur de la chute de pression du piège chargé par rapport à la position de la crémaillère, ou une chute de pression du piège chargé par rapport au débit d'air, ou du débit d'air par rapport à la position de la crémaillère, pour une plage donnée de vitesse du moteur, le microprocesseur (38) étant disposé pour recevoir des signaux d'entrée provenant des moyens de détection de paramètres de fonctionnement du moteur et étant disposé pour comparer les paramètres détectés à la table de correspondance pour une vitesse du moteur donnée.

6. Système selon la revendication 5, caractérisé en ce que le moyen de soupape comprend : un boîtier de soupape (42) définissant un passage à travers celle-ci, une tête de soupape (44) et des pivots (45) sur chaque côté de la tête de soupape (44) se prolongeant dans le boîtier et supportant de manière pivotante la tête de soupape (44), le passage du boîtier comportant des sections d'entrée et de sortie cylindriques et une zone d'écoulement en section transversale en forme rectangulaire a l'intérieur de la soupape, la tête de soupape (44) étant généralement de forme rectangulaire et dimensionnée pour être pivotable à l'intérieur du boîtier (42) pour ouvrir et fermer le passage du boîtier.

7. Système selon la revendication 6, caractérisé en ce que le boîtier (42) comporte une section conique entre la section d'entrée circulaire et la section de forme rectangulaire et entre la section de forme rectangulaire et la section de sortie circulaire afin de procurer une commande d'écoulement précise.

8. système selon l'une quelconque des revendications 5 à 7, caractérisé en ce que le moyen de soupape est une soupape de contre-pression (34) située immédiatement en amont du piège à particules (32) dans le conduit des gaz d'échappement (28).

9. Système selon l'une quelconque des revendications 5 à 8, caractérisé en ce que le moyen d'actionnement de soupape comprend le microprocesseur (38), un capteur de pression (68) en amont du piège, des capteurs de température en amont et en aval du piège (32), un capteur de position de la crémaillère du moteur (78) et un capteur de vitesse de moteur ou TPM (76), la table de correspondance du moteur du microprocesseur (38) étant celle de la chute de pression du piège chargé par rapport a la position de la crémaillère pour une plage des vitesses du moteur, le microprocesseur (38) étant disposé pour recevoir des signaux d'entrée provenant des capteurs de pression, de température, des vitesses du moteur ou TPM et de la position de la crémaillère et étant disposés pour comparer ces paramètres détectés à la table de correspondance de la chute de pression par rapport à la position de la crémaillère pour une vitesse donnée du moteur.

10. Système selon l'une quelconque des revendications 5 à 8 pour utilisation avec un moteur suralimenté, caractérisé en ce que le moyen d'actionnement de soupape comprend le microprocesseur (38), un capteur de pression (68) en amont du piège (32), des capteurs de température (70, 72) en amont et en aval du piège (32), un dispositif de mesure du débit d'air (74) en amont du compresseur (18) du suralimenteur et un capteur de vitesse du moteur (76), la table de correspondance du moteur du microprocesseur (38) étant celle de la chute de pression du piège chargé par rapport au débit d'air pour une plage de vitesse du moteur, le microprocesseur (38) étant disposé pour recevoir des signaux d'entrée provenant des capteurs de pression, de vitesse du moteur et de température et provenant du dispositif de mesure du débit d'air et étant disposé pour comparer ces paramètres détectés à la table de correspondance de la chute de pression par rapport au débit d'air pour une vitesse donnée du moteur.

11. Système selon l'une quelconque des revendications 5 à 8, caractérisé en ce que le moyen d'actionnement de la soupape comprend le microprocesseur (38), les capteurs de température (70, 72) en amont et en aval du piège (32), un dispositif de mesure du débit d'air (74), un capteur de position de la crémaillère (78) et un capteur de vitesse du moteur (76), la table de correspondance du moteur du microprocesseur (38) étant celle du débit d'air par rapport à la position de la crémaillère pour une plage de vitesse du moteur, le microprocesseur (38) étant disposé pour recevoir des signaux d'entrée provenant des capteurs de température, de vitesse du moteur et de position de la crémaillère et provenant du dispositif de mesure du débit d'air et étant disposé pour comparer ces paramètres détectés à la table de correspondance du débit d'air par rapport à la position de la crémaillère pour une vitesse donnée du moteur.

12. Système selon l'une quelconque des revendications 5 à 11, caractérisé par un signal que l'on peut commander manuellement (84) qui est prioritaire sur les signaux provenant des divers capteurs.

**Patentansprüche**

1. Verfahren zur Steuerung der Temperatur in einem Partikelfilter-Regeneriersystem (32) im Auspuffrohr (28) eines Motors (12), bei dem ausgwählte Motorbetriebsparameter (68,70,72,74,76,78,82) ermittelt und eine Ventileinrichtung (34) im Auspuffrohr (28) in Abhängigkeit von den ermittelten Paramtern geöffnet und geschlossen wird, dadurch gekennzeichnet, daß der Betrieb der Ventileinrichtung (34) von einem Mikroprozessor (38) gesteuert wird, in dessen Speicher ein Motordiagramm des Filterdruckabfalls bei Last in Abhängigkeit von der Kurbelwellenstellung oder des Filterdrukabfalls bei Last in Abhängigkeit vom Luftstrom oder des Luftstroms in Abhängigkeit von der Kurbelwellenstellung für einen Motorgeschwindigkeitsbereich gespeichert ist, und daß der Mikroprozessor (38) Eingangssignale von Motorbetriebsparameter-Sensoreinrichtungen empfängt und die ermittelten Parameter mit dem Diagramm für eine bestimmte Motorgeschwindigkeit vergleicht.

2. Verfahren nach Anspruch 1, dadurch gekennzeichnet, daß der Auspuffgasdruck (68) in Strömungsrichtung oberhalb der Ventileinrichtung (34) die Motorgeschwindigkeit (76), die Kurbelwellenstellung (78) und die Auspuffgastemperatur (70) in Strömungsrichtung oberhalb des Filters (32) ermittelt werden, daß der ermittelte Druck mit dem Druck in einer Druckabfall/Kurbelwellenstellungs-Diagramm für einen Bereich von Motorgeschwindigkeiten und Eintrittsfiltertemperaturen verglichen wird, und daß die Auspuffgasströmung in das Filger (32) gedrosselt wird, wenn der Druckabfall geringer als der Diagrammdruckabfall ist, und die Ventileinrichtung (34) geöffnet wird, wenn der Druckabfall den entsprechenden Diagrammdruckabfall überschreitet.

3. Verfahren nach Anspruch 1, dadurch gekennzeichnet, daß die Kurbelwellenstellung (78), der Lufstrom (74) in Strömungsrichtung oberhalb des Kompreesors (18) eines im Motor verwendeten Turboladers, die Temperatur (70) am Eintritt des Filters (32) und die Motorgeschwindigkeit (76) ermittelt werden, daß das Luft/Brennstoff-Verhältnis berechnet wird, daß das Luft/Brennstoff-verhältnis mit und der Luftstrom mit einem Luft/Brennstoff-Verhältnis-Diagramm für eine bestimmte Motorgeschwindigkeit verglichen werden, und daß die Ventileinrichtung (34) geschlossen wird, wenn das Luft/Brennstoff-Verhältnis das Luft/Brennstoff-Verhältsnis im Diagramm für eine bestimmte Motorgeschwindigkeit und Kurbelwellenstellung überschreitet, und daß die Ventileinrichtung (34) geöffnet wird, wenn das Verhältnist geringer ist als das Verhältnist im Diagramm.

4. Verfahren nach Anspruch 2 oder 3, dadurch gekennzeichnet, daß weiterhin die Auspuffgastemperatur (70) in Strömungsrichtung oberhalb des Filters (d32) ermittelt und die Stellung der Ventileinrichtung (32) reguliert wird, um eine konstante Eintrittstemperatur aufrechtzuerhalten.

5. Partikelfilter-Regeneriersystem zur Durchführrung eines Verfahrens nach einem der vorherigen Ansprüche in einem Motor (12) mit einer Auspuffgasleitung (28) zur Abgabe von Auspuffgas und mit einem Auspuffgas-Partikelfilter (32) in der Auspuffgasleitung (28) in Strömungsrichtung unterhalb des Motors (12), mit einer Ventileinrichtung (34) in der Auspuffgasleitung (28) zur Erhöhung der Temperatur des Auspuffgases im Partikelfilter, und mit einer Ventilbetätigungseinrichtung mit einer Einrichtung zur Ermittlung ausgeählter Motorbetriebsparameter (68,70,72,74,76,78,82) sowie mit einer Einrichtung (36,38) zum Öffnen und Schließen der Ventileinrichtung (34) in Abhängigkeit von den ermittelten Paramtern, dadurch gekennzeichnet, daß die Ventilbetätigungseinrichtung einen Mikroprozessor (38) aufweist, in dessen Speicher ein Motordiagramm des Filterdruckabfalls bei Last in Abhängigkeit von der Einspritzpumpen-Zahnstangenstellung oder des Filterdruckabfalls bei Last in Abhängigkeit vom Luftstrom oder des Luftstroms in Abhängigkeit von der Einspritzpumpen-Zahnstangenstellung für einen bestimmten Bereich von Motorgeschwindigkeiten gespeichert ist, wobei der Mikrospeicher (38) so ausgebildet ist, daß er Eingangssignale von Motorbetriebsparameter-Sensoreinrichtungen empfängt und diese ermittelten Parameter mit dem Diagramm für eine bestimmte Motorgeschwindigkeit vergleicht.

6. System nach Anspruch 5, dadurch gekennzeichnet, daß die Ventileinrichtung ein Ventilgehäuse (42), das einen Durchgangskanal begrenzt, einen Ventilkopf (44) und Schwenkzapfen (45) auf jeder Seite des Ventikopfes (44) aufweist, die sich in das Gehäuse erstrecken und den Ventilkopf schwenkbar lagern, wobei der Gehäusekanal zylindrische Eintritts- und Austrittsabschnitte und einen Strömungsbereich mit etwa rechteckigem Querschnitt im Ventil aufweist, und der Ventilkopf (44) etwa rechteckig geformt und so bemessen ist, daß er im Gehäuse (42) zum Öffnen uns Schließen des Gehäusekanals schwenkbar gelagert ist.

7. System nach Anspruch 6, dadurch gekennzeichnet, daß das Gehäuse (42) einen abgeschrägten Abschnitt zwischen dem kreisförmigen Eintrittsabschnitt und dem rechteckigen Abschnitt sowie zwischen dem rechteckigen Abschnitt und dem kreisförmigen Austrittsabschnitt aufweist, um eine Vernier-Strömungssteuerung zu bewirken.

8. System nach einem der Ansprüche 1 bis 7, dadurch gekennzeichnet, daß die Ventileinrichtung ein Rückschlagventil (34) ist, das in Strömungsrichtung unmittelbar oberhalb des Partikelfilters (32) in der Auspuffgasleitung (28) angeordnet ist.

9. System nach einem der Ansprüche 5 bis 8, dadurch gekennzeichnet, daß die Ventilbetätigungseinrichtung einen Mikroprozessor (38), einen Drucksensor (68) in Strömungsrichtung oberhalb des Filters, Temperatursensoren in Strömungsrichtung oberhalb und unterhalb des Filters (32), einen Motor-Einspritzpumen-Zahnstangenstellungssensor (78) und einen Motorgeschwindigkeits- oder Drehzahlsensor (76) aufweist, wobei das Motordiagramm des Mikroprozessors (38) den Filterdruckabfall bei Last in Abhängigkeit von der Einspritzpumpen-Zahnstangenstellung für einen Bereich von Motorgeschwindigkeiten wiedergit, und der Mikroprozessor (38) so ausgebildet ist, daß er Eingangsignale von den Druck-, Temperatur-, Motorgeschwindigkeits- oder Drehzahl und Zahnstangenstellungssensoren empfängt und diese ermittelten Paramter mit dem Druckabfall/Zahnstellungs-Diagramm für eine bestimmte Motorgeschwindigkeit vergleicht.

10. System nach einem der Ansprüche 5 bis 8, für einen Motor mit Turbolader, dadurch gekennzeichnet, daß die Ventilbetätigungseinrichtung den Mikroprozessor (38), einen Drucksensor (68) in Strömungsrichtung oberhalb des Filters (32), Temperatursensoren (70,72) in Strömungsrichtung oberhalb und unterhalb des Filters (32), eine Luftstrom-Meßeinrichtung (74) in Strömungsrichtung oberhalb des Kopressors (18) des Turboladers und einen Motorgeschwindigkeitsensor (76) aufweist, wobei das Motordiagramm des Mikroprozessors (38) den Filterdruckabfall bei Last in Abhängigkeit vom Luftstrom für einen Bereich von Motorgeschwindigkeiten wiedergibt, und der Mikroprozessor (38) so ausgebildet ist, daß er Eingangssignale von den Druck-, Motorgeschwindigkeits- und Temperatursensoren und von der Luftstrom-Meßeinrichtung empfängt, und diese ermittelten Parameter mit dem Druckabfals/Luftstom-Diagramm für eine bestimmte Motorgeschwindigkeit vergleicht.

11. System nach einem der Ansprüche 5 bis 8, dadurch gekennzeichnet, daß die Vedntilbetätigungseinrichtung den Mikroprozessor (38), Temperatursensoren (70,72) in Strömungsrichtng oberhalb und unterhalb des Filters (32), eine Luftstrom-Meßeinrichtung (74), einen Einspritzpumpen-Zahnstangenstellungssensor (78) und einen Motorgeschwindigkeitssenor (76) aufweist, wobei der Mikroprozessor (38) so ausgebildet ist, daß er Eingangssignale von den Temperatur-, Motorgeschsindigkeits- und Zahnstangenstellungssensoren und von der Luftstrom-Meßeinrichtung empfängt und diese ermittelten Parameter mit dem Luftstrom/Zahnstangenstellungs-Diagramm für eine bestimmte Motorgeschwindigkeit vergleicht.

12. System nach einem der Ansprüche 5 bis 11, gekennzeichnet durch ein manuell betätigbares Signal, das die Signale der verschiedenen Sensoren übersteuert.

FIG. 1

FIG. 2

EP 0 260 031 B1

FIG. 3b

FIG. 3a

*FIG. 4* LOADED TRAP PRESSURE DROP AT PART LOAD AT 1200 AND 1800 RPM

FIG. 5 BACKPRESSURE REQUIRED FOR REGENERATION AT 1200 RPM

TRAP INLET TEMP.
1200 DEG. F.

TRAP INLET TEMP.
1100 DEG. F.

TRAP INLET TEMP.
1000 DEG. F.

TRAP INLET TEMP.
900 DEG. F.

LB FUEL/1000 STROKES/CYLINDER

PRESSURE, PSIG

16

FIG. 6
BACKPRESSURE REQUIRED TO
OBTAIN 1200°F TRAP INLET
TEMPERATURE

MAX POWER

3 PSI
4 PSI
5 PSI
6
8
10
15
20
25
30
35
40

PART LOAD OPERATION

ENGINE ACTS AS A BRAKE

ZERO HP

LB FUEL/1000 STROKES/CYLINDER

RPM x 10²

FIG. 7 BACKPRESSURE VS. AIR FLOW DURING REGENERATION AT 1200 RPM

EP 0 260 031 B1

FIG. 8 AIR FLOW VS. FUEL FLOW DURING REGENERATION AT 1200 RPM

TRAP INLET TEMP.
1200 DEG. F.

TRAP INLET TEMP.
1100 DEG. F.

TRAP INLET TEMP.
1000 DEG. F.

AIR/FUEL RATIO

100
80
60
40
30
20
10

0    0.1    0.2    0.3    0.4    0.5

LB FUEL/1000 STROKES/CYLINDER

**FIG. 9** AIR/FUEL RATIO DURING REGENERATION AT 1200 RPM

FIG. 10 VALVE AREA REQUIRED FOR REGENERATION AT 1800 RPM